# EUROPÄISCHE PATENTANMELDUNG

(11) **EP 2 604 368 A1**
(43) Veröffentlichungstag der Anmeldung: **19.06.2013**
(21) Anmeldenummer: 12008285.4
(22) Anmeldetag: 12.12.2012
(51) Int. Cl.: B23C 5/10

(54) **Bearbeitungswerkzeug**

(30) Priorität: 14.12.2011 DE 202011109055 U
(71) Anmelder: Ledermann GmbH & Co. KG, 72160 Horb a. N. (DE)
(72) Erfinder: Galli, Olivier, 71154 Nufringen (DE)
(74) Vertreter: Zurhorst, Stefan

(57) **Zusammenfassung**

Die Erfindung betrifft ein Bearbeitungswerkzeug für die zerspanende Bearbeitung von Werkstoffen, insbesondere für Holz oder holzartige Werkstoffe, Metalle, Kunststoffe und/oder Verbundwerkstoffe. Das Bearbeitungswerkzeug ist vorgesehen zum drehenden Antrieb um eine Drehachse (1) und weist einen Schaft (2) auf. Der Schaft (2) umfasst einen Grundkörper (3) mit einem mittigen Aufnahmeraum, wobei der Aufnahmeraum eine die Steifigkeit des Schaftes (2) erhöhende Füllung (4) enthält.

## Beschreibung

Die Erfindung betrifft ein Bearbeitungswerkzeug der im Oberbegriff des Anspruchs 1 angegebenen Gattung.

Bei der zerspanenden Bearbeitung von Werkstoffen, insbesondere bei der Zerspanung von Holz oder holzartigen Werkstoffen, Verbundwerkstoffen oder dergleichen, herrschen insbesondere bei der Bearbeitung im industriellen Maßstab stetig steigende Anforderungen sowohl an die Bearbeitungsqualität als auch an die Wirtschaftlichkeit. Beispielsweise werden eine geringe Kantenschartigkeit, riefen- und ausrissfreie Oberflächen bei gleichzeitig sinkenden Bearbeitungszeiten angestrebt. Die angestrebten hohen Vorschubgeschwindigkeiten erzeugen hohe mechanische Belastungen am Werkzeugschaft. Bearbeitungswerkzeuge mit langgestreckter, schlanker Bauform des Schaftes sind hiervon besonders betroffen und neigen zum Schaftbruch.

Besonders deutlich wird dieses Problem bei sogenannten Schaftfräsern, die beispielsweise für das Heraustrennen von Werkstücken aus einem Plattenmaterial eingesetzt werden. Neben der bereits genannten hohen Vorschubgeschwindigkeit soll hierbei auch das Zerspanungsvolumen minimiert werden, um insbesondere die kostenintensive Spanabsaugung zu minimieren. Konventionelle Schaftfräser bestehen aus einem stählernen Schaftgrundkörper, der sich über einen Einspannabschnitt und einen Schneidenabschnitt erstreckt. Im Schneidenabschnitt sind in den Schaftgrundkörper Spanräume bzw. Spannuten eingearbeitet. Die Schneiden können Teil des Grundkörpers sein und eine Veredelung (Härtung, Beschichtung mit Schneidstoffen wie Diamant, Keramik usw.) aufweisen. Alternativ können auch Schneidplatten aus Hartmetall oder dergleichen aufgelötet, geklemmt oder in anderer Weise befestigt sein. Die in den Grundkörper des Schaftes eingearbeiteten Spanräume erzeugen eine die Tragfähigkeit herabsetzende Querschnittsschwächung. Sofern darüber hinaus der Durchmesser insbesondere des Schneidenabschnittes bzw. des Schaftes insgesamt zur Verringerung des Zerspanungsvolumens reduziert und dennoch eine hohe bzw. erhöhte Vorschubgeschwindigkeit angestrebt werden soll, kann dies zu einer Überlastung des Schaftes mit der Gefahr des Schaftbruches führen.

Ein vergleichbares Problem tritt auch bei Schaftfräsern mit zwei axial gegeneinander versetzten und gegenläufigen Schneidbereichen auf. Solche Schaftfräser werden beispielsweise für die Kantenbearbeitung von Werkstücken eingesetzt. Zur Vermeidung von Ausrissen beim Austritt des Werkzeuges aus dem Material werden im Laufe einer Kantenbearbeitung Dreh- und Vorschubrichtung gewechselt, ohne dass ein Werkzeugwechsel stattfindet. Beim Richtungswechsel wird lediglich das Werkzeug in seiner axialen Höhe verfahren, so dass die jeweils geeignete Schneidenanordnung zum Einsatz kommt. Auch hier bedingt der axiale Versatz beider Schneidengruppen eine langgestreckte schlanke Bauform des Schaftes mit einer erhöhten Bruchneigung bei geringen Durchmessern. Sinngemäß das Gleiche gilt auch für T-Nut-Fräser, Schlosskastenfräser oder vergleichbare andere Bearbeitungswerkzeuge mit einem hohen Schlankheitsgrad des jeweiligen Schaftes.

Der Erfindung liegt die Aufgabe zugrunde, ein gattungsgemäßes Bearbeitungswerkzeug derart weiterzubilden, dass ein verbessertes Verhältnis von Schlankheit zur Tragfähigkeit des Schaftes erzielt ist.

Diese Aufgabe wird durch ein Bearbeitungswerkzeug mit den Merkmalen des Anspruchs 1 gelöst.

Nach der Erfindung ist vorgesehen, dass der Schaft einen Grundkörper insbesondere aus Stahl oder aus Aluminium bzw. einer Aluminiumlegierung mit einem mittigen Aufnahmeraum umfasst, wobei der Aufnahmeraum eine die Steifigkeit des Schaftes erhöhende Füllung enthält.

Als Grundlage für die Erfindung wurde zunächst erkannt, dass das eingangs beschriebene Problem des Schaftbruches bei schlanken Werkzeugschäften auf eine unzureichende Biegewechselfestigkeit zurückzuführen ist. Trotzdem wurde diesem Problem nicht durch die üblichen Maßnahmen einer Geometrie- oder Materialanpassung beim Schaftgrundkörper begegnet. Vielmehr wurde der Umweg gewählt, die angestrebte erhöhte Tragfähigkeit durch Beeinflussung der Steifigkeit, insbesondere der Biegesteifigkeit des Schaftes herbeizuführen. Die Anordnung der die Steifigkeit des Grundkörpers erhöhenden Füllung im Inneren des Grundkörpers reduziert zwar nicht die Biegeverformung in dem gleichen Maß wie ein am Umfang aufgebrachtes Material mit erhöhter Steifigkeit. Es tritt aber eine überraschende Kombination mehrerer Effekte ein, die zu dem gewünschten Ergebnis führt.

Durch die innenseitige Anordnung der Füllung muss diese nur eine steifigkeitserhöhende Wirkung haben, ohne jedoch selbst eine besonders hohe Biegefestigkeit aufweisen zu müssen. Dies erweitert die Möglichkeiten bzw. Freiheiten bei der Auswahl eines geeigneten Füllungsmaterials. Gleichzeitig wird durch die steifigkeitserhöhende Wirkung der Füllung die Verformung, insbesondere die Biegeverformung des Schaftes unter gegebener Last reduziert, was bei gegebener Geometrie zu einer Verringerung der Spannungen, insbesondere der Biegespannungen im äußeren Mantelbereich des Schaftgrundkörpers führt. Der Schaftgrundkörper kann deshalb weiterhin aus den üblichen bevorzugten Werkstoffen wie Stahl, beispielsweise aus Werkzeugstahl oder aus Aluminium bzw. einer Aluminiumlegierung mit all ihren vorteilhaften Eigenschaften bestehen, woraus sich in Verbindung mit der reduzierten Verformung eine erhöhte Festigkeit bzw. Tragfähigkeit ergibt. Bei gegebener Geometrie des Schaftes kann die Vorschubgeschwindigkeit des Bearbeitungswerkzeuges erhöht werden. Bei gegebener Betriebslast kann der Schlankheitsgrad, also das Verhältnis der freien Schaftlänge zum Bezugsdurchmesser unter Beibehaltung oder sogar Vergrößerung der Tragfähigkeit erhöht werden. Die Wirtschaftlichkeit des erfindungsgemäßen Bearbeitungswerkzeuges ist gegenüber der herkömmlichen Bauform signifikant erhöht. Durch die möglich gewordenen schlankeren Bauformen lassen sich neue Anwendungsfälle erschließen.

Für die Ausgestaltung des Aufnahmeraumes kommen verschiedene Möglichkeiten in Betracht. In einer bevorzugten Ausführungsform ist der Aufnahmeraum als koaxial zur Drehachse des Bearbeitungswerkzeuges angeordnete Aufnahmebohrung ausgeführt. Hieraus folgt eine nahezu beliebig lange Erstreckung des Aufnahmeraumes entlang der Längs- bzw. Drehachse, in dessen Folge alle relevanten Bereiche des Schaftes mit der steifigkeitserhöhenden Wirkung der Füllung beaufschlagt werden können.

Der Schaft weist einen Einspannabschnitt und einen Schneidenabschnitt auf. In vorteilhafter Weiterbildung erstrecken sich der Aufnahmeraum sowie seine Füllung zumindest über den Grenzbereich von Einspannabschnitt und Schneidenabschnitt. In bestimmten Ausführungsformen weist der Schaft einen zwischen dem Einspannabschnitt und dem Schneidenabschnitt liegenden Zwischenabschnitt auf. In vorteilhafter Weiterbildung der Erfindung verläuft die Füllung zumindest über einen Teil des Einspannabschnittes, über den gesamten Zwischenabschnitt sowie zumindest über einen Teil des Schneidenabschnitts. Damit wird der Erkenntnis Rechnung getragen, dass die höchste Bruchgefährdung im Grenz- bzw. Übergangsbereich vom Einspannabschnitt zum Schneidenabschnitt liegt oder - sofern vorhanden - auch im Zwischenabschnitt liegen kann. Zumindest in diesem gefährdeten Bereich kommt die steifigkeitserhöhende Wirkung der Füllung zum Tragen.

Je nach Anforderungsprofil kann es zweckmäßig sein, den Aufnahmeraum bzw. die Aufnahmebohrung vom schneidenseitigen Ende des Schaftes aus in den Schaft einzubringen. Bevorzugt erstreckt sich der Aufnahmeraum ausgehend vom einspannseitigen Ende des Schaftes bis in den Schneidenabschnitt hinein. Hierdurch wird erzielt, dass das schneidenseitige Ende des Bearbeitungswerkzeuges vom Aufnahmeraum unbeeinträchtigt bleibt und in dessen Folge nach Belieben mit Schneiden bestückt oder in beliebig anderer Form ausgestaltet sein kann.

Die Vorteile der erfindungsgemäßen Ausführungen kommen bei solchen Bauausführungen besonders deutlich zum Tragen, bei denen das Verhältnis einer über den Einspannabschnitt überkragenden Länge des Schaftes zum Durchmesser des Schneidenabschnittes oder des Zwischenabschnittes ≥ 2,0 und insbesondere ≥ 2,5 ist. Bei solchen oder größeren Schlankheitsgraden nimmt das der Erfindung zugrundeliegende Problem der Biegewechselbelastung eine signifikante Größe an, welche mittels der erfindungsgemäßen Ausgestaltung ebenso signifikant in Grenzen gehalten werden kann.

Für die die Steifigkeit erhöhende Füllung kommen verschiedene Varianten in Betracht. In einer bevorzugten Ausführungsform ist die Füllung als Stift ausgeführt. Der Stift ist gleichermaßen wie die Aufnahmebohrung mit geringem Aufwand und geringen Kosten herstellbar und montierbar. Dabei kann es zweckmäßig sein, den Stift beispielsweise einzulöten oder einzukleben. Bevorzugt ist der Stift unter radialer Vorspannung in der Aufnahmebohrung gehalten, was beispielsweise durch Einpressen und insbesondere durch Einschrumpfen erzielt werden kann. Neben einer einfachen und zuverlässigen Fixierung des Stiftes trägt die radiale Vorspannung zur Aussteifung des den Stift umgebenden Schaftmantels bei.

Für die Ausgestaltung des Stiftes kommen verschiedene Möglichkeiten in Betracht. Bevorzugt weist der Stift einen größeren E-Modul auf als das Material des Grundkörpers. Beispielsweise kann der Grundkörper des Schaftes aus Aluminium bzw. aus einer Aluminiumlegierung bestehen, während der Stift einen im Vergleich dazu höheren Elastizitätsmodul (E-Modul) aufweist, indem er beispielsweise aus Stahl besteht. Bei einer Ausführung des Schaftgrundkörpers aus Stahl oder Aluminium besteht der Stift bevorzugt aus Hartmetall. Hartmetalle wie Wolfram, wolframhaltige Legierungen bzw. Sinterwerkstoffe oder dergleichen weisen gegenüber Stahl, Aluminium oder anderen Grundkörperwerkstoffen einen deutlich höheren E-Modul auf. Die Gesamtsteifigkeit und insbesondere die gesamte Biegesteifigkeit des Schaftes werden durch den Verbund aus Hartmetall und dem im Vergleich dazu elastischeren Material (Stahl oder Aluminium) des Schaftgrundkörpers in einer Weise erhöht, dass die Materialbelastung in der äußeren Hülle des Schaftes hinreichend verringert ist. Bei einer Kombination des höheren Stift-E-Moduls mit der oben erwähnten radialen Vorspannung ergänzen sich die beiden vorgenannten Wirkungen in vorteilhafter Weise.

Alternativ kann es zweckmäßig sein, dass die Füllung durch eine gestaltlose Masse gebildet ist. Als gestaltlose Masse sind solche Materialien gemeint, die aufgrund eigener fehlender Formbeständigkeit die Form des Aufnahmeraums annehmen. Solche Materialien können beispielsweise fließ- oder rieselfähige Materialien, also Flüssigkeiten wie Öl oder dergleichen, pulverförmige Feststoffe, bestimmte Polymere und auch Gemische davon sein. Für die Aufnahme einer solchen gestaltlosen Masse ist der Aufnahmeraum geschlossen, wobei dann die gestaltlose Masse unter Innendruck im geschlossenen Aufnahmeraum gehalten ist. Der Innendruck erzeugt vergleichbar zum eingepressten bzw. eingeschrumpften Stift eine Vorspannung in den Wandabschnitten des Werkzeugschaftes und stabilisiert diese in steifigkeitserhöhender Weise, wodurch die gewünschte Erhöhung der Tragfähigkeit erzielt werden kann.

In einer bevorzugten Ausführungsform ist ein Verschlussstopfen für den geschlossenen Aufnahmeraum vorgesehen, der mittels eines Gewindes mit dem Grundkörper verschraubt ist. Hierdurch ist nicht nur eine konstruktiv einfache Bauform gegeben. Vielmehr kann der Gewindestopfen auch dazu genutzt werden, die Füllung unter Druck zu setzen und damit auch den gewünschten Innendruck im Aufnahmeraum zu erzeugen.

Ausführungsbeispiele der Erfindung sind nachfolgende anhand der Zeichnung näher beschrieben. Es zeigen:
- Fig. 1: in einer perspektivischen Übersichtsdarstellung ein erstes Ausführungsbeispiel eines erfindungsgemäßen Bearbeitungswerkzeuges in Form eines Schaftfräsers mit einem innen liegenden Aussteifungselement;
- Fig. 2: in einer Längsschnittdarstellung den Schaftgrundkörper des Werkzeuges nach Fig. 1 mit einer mittigen Aufnahmebohrung;
- Fig. 3: den Schaftgrundkörper nach Fig. 2 mit einem in der Aufnahmebohrung eingeschrumpften Hartmetallstift;
- Fig. 4: eine Variante des Schneidwerkzeuges nach Fig. 3 in Form eines T-Nut-Fräsers mit zwischen dem Einspannabschnitt und dem Schneidenabschnitt liegenden Zwischenabschnitt und mit durch den Zwischenabschnitt hindurchreichendem Hartmetallstift;
- Fig. 5: eine Variante der Anordnung nach den Fig. 3 und 4 mit einer geschlossenen, eine amorphe Masse enthaltenden Aufnahmebohrung;
- Fig. 6: ein weiteres Ausführungsbeispiel eines erfindungsgemäß ausgeführten Schneidwerkzeuges mit überlangem Schneidenabschnitt und durchgehender Aufnahmebohrung.

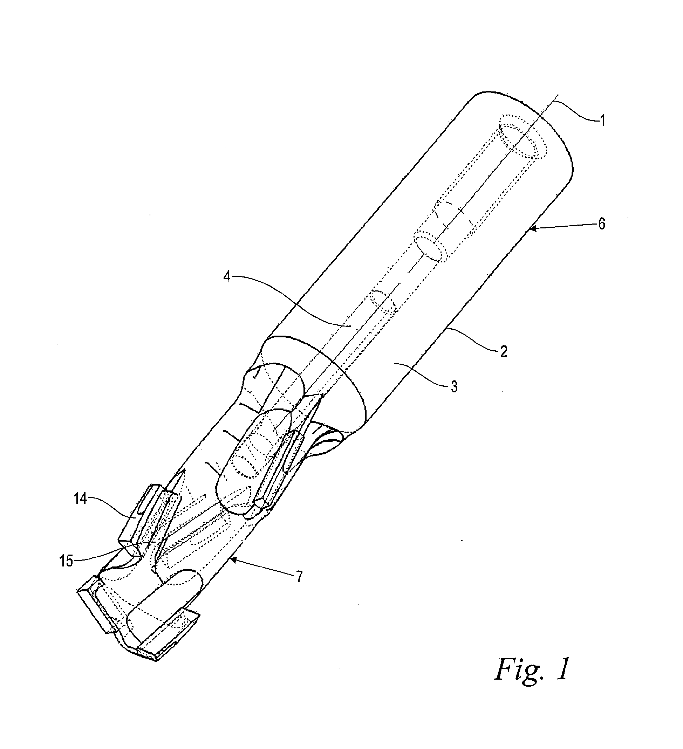

Fig. 1 zeigt in einer perspektivischen Ansicht ein erfindungsgemäß ausgeführtes Bearbeitungswerkzeug in Form eins Schaftfräsers, welches für die zerspanende Bearbeitung von Werkstoffen, insbesondere von Holz, holzartigen Werkstoffen, Metallen, Kunststoffen und/oder Verbundwerkstoffen vorgesehen ist.

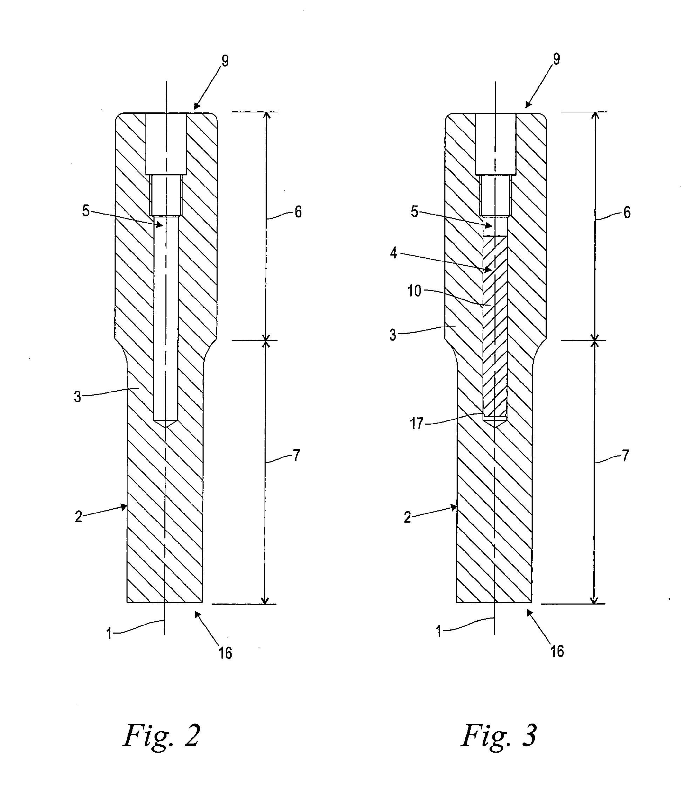

Das Bearbeitungswerkzeug umfasst einen Schaft 2 mit einem Grundkörper 3 aus Stahl, an dem einteilig ein zylindrischer Einspannabschnitt 6 und stirnseitig daran angrenzend ein Schneidenabschnitt 7 ausgebildet sind. Es kommen aber auch andere Werkstoffe wie Aluminium bzw. eine Aluminiumlegierung für den Grundkörper 3 in Betracht. Der Grundkörper 3 des Schaftes 2 bildet die Mantelfläche des Einspannabschnitts 6 sowie den gesamten Schneidenabschnitt 7. In den Schneidenabschnitt 7 sind Spannuten 15 unter Bildung von Schneiden 14 eingearbeitet, wobei die Schneiden 14 einteilig mit dem Grundkörper 3 (Fig. 2) ausgeführt sind. Die Schneiden 14 können durch Härtung, Beschichtung mit Schneidstoffen wie Diamant, Keramik oder dergleichen veredelt sein. Alternativ können die Schneiden 14 als Einzelteile aus Hartmetall, PKD (polykristalliner Diamant) oder dergleichen gebildet und beispielsweise durch Verlötung, Klemmung oder dgl. mit dem Grundkörper 3 (Fig. 2) verbunden sein.

Im Betrieb wird das Bearbeitungswerkzeug mittels seines Einspannabschnittes 6 in ein Spannfutter eingespannt und drehend um eine Drehachse 1, die auch die Längsachse des Bearbeitungswerkzeuges bzw. seines Schaftes 2 bildet, angetrieben. Die auf einer Kreisbahn um die Drehachse 1 sich bewegenden Schneiden 14 zerspanen dabei einen der eingangs genannten Werkstoffe, wobei Reaktionskräfte unter anderem radial zur Drehachse 1 entstehen. Diese Reaktionskräfte erzeugen eine Biegebelastung des Schaftes 2 mit einem Biegemomentenvektor, der senkrecht auf der Drehachse 1 steht.

Zur Erhöhung der Tragfähigkeit des Schaftes 2 insbesondere gegenüber der zuvor beschriebenen Biegebelastung, welche infolge der Drehbewegung des Bearbeitungswerkzeuges eine Biegewechsellast ist, ist innerhalb des Schaftes 2 ein Aufnahmeraum mit einer die Steifigkeit des Schaftes 2 erhöhenden Füllung 4 angeordnet.

Fig. 2 zeigt in einer Längsschnittdarstellung den Grundkörper 3 des Schaftes 2 nach Fig. 1, wobei der besseren Übersichtlichkeit halber die Schneiden 14 und die Spannuten 15 (Fig. 1) hier nicht dargestellt sind. Der Schaft 2 bzw. sein Grundkörper 3 weist in Richtung der Drehachse 1 ein einspannseitiges Ende 9 sowie gegenüberliegend ein schneidenseitiges Ende 16 auf. Ausgehend vom einspannseitigen Ende 9 erstreckt sich der Einspannabschnitt 6 mit einem bestimmten Durchmesser. In Axialrichtung bzw. in Richtung der Drehachse 1 schließt sich hieran der Schneidenabschnitt 7 an, der ausgehend vom Einspannabschnitt 6 bis zum schneidenseitigen Ende 16 verläuft. In der Längsschnittdarstellung nach Fig. 2 ist erkennbar, dass der tragende Querschnitt bzw. der Durchmesser des Schneidenabschnittes 7 kleiner ist als derjenige des Einspannabschnittes 6. Das Verhältnis einer über den Einspannabschnitt 6 überkragenden Länge des Schaftes 2, hier der Länge des Schneidenabschnittes 7 zum Durchmesser des Schneidenabschnitts 7 ist vorteilhaft ≥ 2,0 und insbesondere ≥ 2,5, und beträgt im gezeigten Ausführungsbeispiel etwa 3,5. Natürlich können im Rahmen der Erfindung auch größere Verhältnisse gewählt werden.

Der bereits im Zusammenhang mit Fig. 1 erwähnte Aufnahmeraum ist entsprechend der Darstellung nach Fig. 2 als Aufnahmebohrung 5 ausgeführt, die ausgehend vom einspannseitigen Ende 9 koaxial zur Drehachse 1 durch den gesamten Einspannabschnitt 6 bis in den Schneidenabschnitt 7 hinein verläuft und dort geschlossen in Form einer Sackbohrung endet. Dabei erstreckt sich der als Aufnahmebohrung 5 ausgeführte Aufnahmeraum insbesondere über den Grenzbereich von Einspannabschnitt 6 und Schneidenabschnitt 7.

Fig. 3 zeigt in einer Längsschnittdarstellung den Schaft 2 nach Fig. 2 mit einer in die Aufnahmebohrung 5 eingebrachten Füllung 4 zur Erhöhung der Steifigkeit des Schaftes 2. Die steifigkeitserhöhende Füllung 4 ist im Ausführungsbeispiel nach Fig. 3 als Stift 10, hier als Hartmetallstift beispielsweise aus Wolfram oder einer Wolframlegierung ausgeführt und weist an seinem dem schneidenseitigen Ende 16 zugewandten Ende eine Montageschräge 17 auf. Mittels der Montageschräge 17 ist der Stift 10 ausgehend vom einspannseitigen Ende 9 in die Aufnahmebohrung 5 eingeführt und dort eingeschrumpft. Anstelle einer Einschrumpfung des Stiftes 10 durch Erwärmung des Grundkörpers 3 und/oder durch Abkühlung des Stiftes 10 kann auch ein einfaches Einpressen in axialer Richtung zweckmäßig sein. In jedem Falle ist hierdurch sichergestellt, dass der Stift 10 unter radialer Vorspannung in der Aufnahmebohrung 5 gehalten ist. Alternativ kann auch ein Einlöten, ein Einkleben oder eine andere Fixierung des Stiftes 10 innerhalb der Aufnahmebohrung 5 zweckmäßig sein.

Anstelle der hier gezeigten Hartmetallausführung kann der Stift 10 auch aus anderen Materialien wie beispielsweise Stahl, Keramik, Kohlefaserverbund oder dgl. bestehen. Bevorzugt ist dabei der E-Modul des Stiftes 10 größer als der E-Modul des Materials, aus dem der Grundkörper 3 des Schaftes 2 gebildet ist. Beispielsweise kann der Grundkörper 3 aus Aluminium bzw. aus einer Aluminiumlegierung bestehen, während der Stift 10 beispielsweise aus Stahl oder aus Hartmetall in beiden Fällen einen im Vergleich zum Grundkörper 3 höheren E-Modul aufweist.

Bezogen auf die durch die Drehachse 1 vorgegebene axiale Richtung ist der Stift 10 derart positioniert, dass er sich über den Grenzbereich von Einspannabschnitt 6 und Schneidenabschnitt 7 erstreckt, dass er also sowohl den Einspannabschnitt 6 als auch den Schneidenabschnitt 7 in axialer Richtung teilweise übergreift. Ungeachtet der Montageschräge 17 gilt die vorgenannte axiale Positionierung insbesondere für denjenigen Bereich des Stiftes 10, in dem er im flächigen Kontakt mit der Umfangswand der Aufnahmebohrung 5 steht.

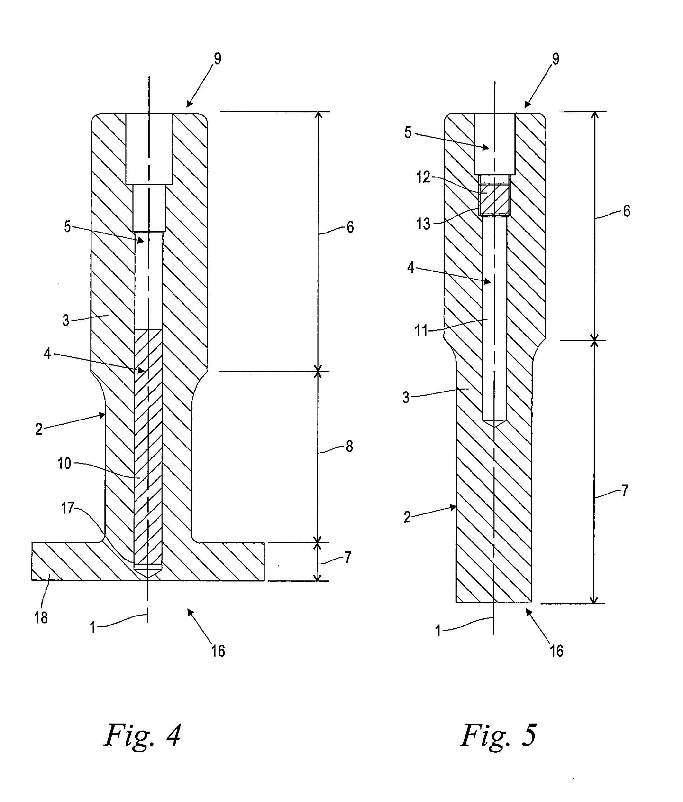

Fig. 4 zeigt in einer Längsschnittdarstellung eine Variante des Bearbeitungswerkzeuges nach Fig. 3, welches als T-Nut-Fräser ausgeführt ist. Zwischen dem Einspannabschnitt 6 und dem Schneidenabschnitt 7 liegt ein Zwischenabschnitt 8, dessen Durchmesser geringer ist als derjenige des Einspannabschnitts 6. Der Schneidenabschnitt 7 ist mit einem einteilig angeformten, scheibenförmigen Schneidenträger 18 versehen, an dessen Umfang nicht dargestellte Schneiden angeordnet sind. Die über den Einspannabschnitt 6 überkragende Länge des Schaftes 2 setzt sich aus der Länge des Zwischenabschnittes 8 und der axialen Länge des Schneidenabschnittes 7 zusammen. Als Bezugsgröße für die Schlankheit wird der Durchmesser des schwächeren Zwischenabschnitts 8 gewählt, wobei im gezeigten Ausführungsbeispiel das Verhältnis der über den Einspannabschnitt 6 überkragenden Länge zum Durchmesser etwa 2,5 beträgt.

Der als Aufnahmebohrung 5 ausgeführte Aufnahmeraum für die Füllung 4 erstreckt sich ausgehend vom einspannseitigen Ende 9 durch den gesamten Einspannabschnitt 6 und den gesamten Zwischenabschnitt 8 hindurch bis in den Schneidenabschnitt 7 hinein. Die Füllung 4 ist wie auch beim Ausführungsbeispiel nach Fig. 3 als Stift 10 ausgeführt und erstreckt sich über einen Teil des Einspannabschnitts 6, über den gesamten Zwischenabschnitt 8 sowie zumindest über einen Teil des Schneidenabschnitts 7. Insbesondere überdeckt die Füllung 4 dabei sowohl den Übergangsbereich vom Einspannabschnitt 6 zum Zwischenabschnitt 8 als auch den Übergangsbereich vom Zwischenabschnitt 8 zum Schneidenabschnitt 7. Letzteres gilt insbesondere für denjenigen Bereich des Stiftes 10, der abseits der Montageschräge 17 zylindrisch ausgeführt ist und mit seiner zylindrischen Umfangsfläche an der zylindrischen Innenfläche der Aufnahmebohrung 5 anliegt.

Bei den Ausführungsbeispielen nach den Fig. 2 bis 4 kann es auch zweckmäßig sein, dass die Aufnahmebohrung 5 vom schneidenseitigen Ende 16 aus in den Grundkörper 3 eingebracht ist. Im Falle einer durchgehenden Bohrung kann sich der Stift 10 auch über die gesamte Länge des Schaftes 2 bzw. seines Grundkörpers 3 erstrecken.

Fig. 5 zeigt in einer Längsschnittdarstellung eine weitere Variante des Bearbeitungswerkzeuges nach Fig. 3. Der als Aufnahmebohrung 5 ausgeführte Aufnahmeraum für die Füllung 4 ist dicht geschlossen. Hierzu ist nahe dem einspannseitigen Ende 9 ein Gewinde 13 vorgesehen, mittels dessen ein Verschlussstopfen 12 vom einspannseitigen Ende 9 aus in die Aufnahmebohrung 5 eingedreht ist. Da die Aufnahmebohrung 5 im Übrigen als Sackloch ausgeführt ist, ist der Aufnahmeraum mittels des Verschlussstopfens 12 dicht verschlossen.

Die die Steifigkeit des Schaftes 2 erhöhende Füllung ist hier als gestaltlose bzw. amorphe Masse 11 ausgeführt und kann eine Flüssigkeit, insbesondere Öl, ein Pulver, ein Polymer oder ein Gemisch davon sein. Beim Einfüllen der an sich gestaltlosen Masse 11 in die Aufnahmebohrung 5 nimmt die Masse 11 die Form des Aufnahmeraumes bzw. der Aufnahmebohrung 5 an und wird beim Einschrauben des Verschlusstopfens 12 unter Druck gesetzt. Abhängig von der Verformbarkeit der Masse 11 wird durch den aufgebrachten Druck das vollständige Ausfüllen des Aufnahmeraums begünstigt. Insbesondere aber werden die durch den Grundkörper 3 gebildeten Wände des Aufnahmeraums bzw. der Aufnahmebohrung 5 unter Innendruck gesetzt, wodurch eine aussteifende und damit die Tragfähigkeit des Schaftes 2 erhöhende Wirkung erzielt wird.

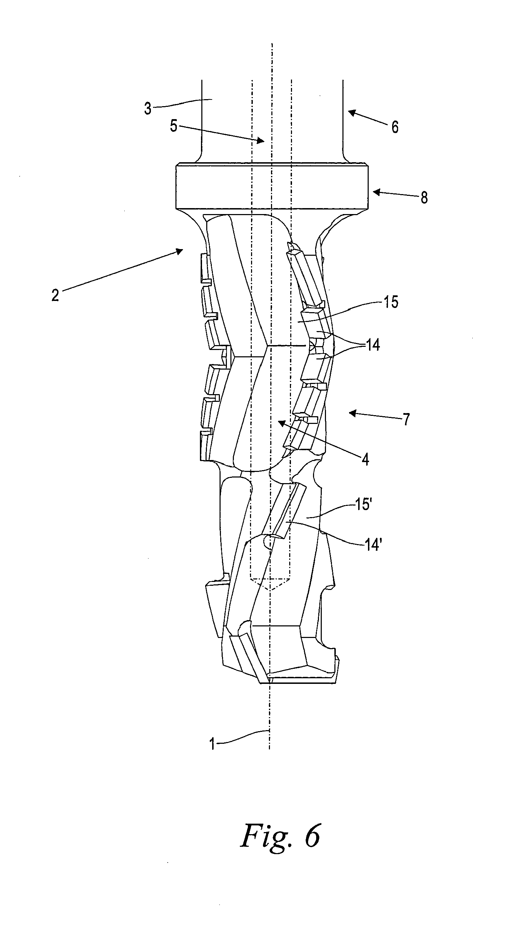

Fig. 6 zeigt noch in einer Seitenansicht ein weiteres Ausführungsbeispiel eines erfindungsgemäßen Bearbeitungswerkzeuges mit gegenüber den Fig. 1 bis 5 verlängertem und schlankeren Schneidenabschnitt 7. Im Schneidenabschnitt 7 sind Spannuten 15, 15' mit zueinander gegenläufigen Schneiden 14, 14' ausgeformt, wobei die oberen Schneiden 14 rechtsdrehend und die unteren Schneiden 14' linksdrehend ausgerichtet sind. Durch axialen Versatz des gezeigten Bearbeitungswerkzeuges und Anpassung seiner Drehrichtung um die Drehachse 1 kommen nach Wahl die oberen Schneiden 14 oder die unteren Schneiden 14' zum Einsatz.

Zwischen dem Einspannabschnitt 6 und dem Schneidenabschnitt 7 ist auch hier ein Zwischenabschnitt 8 angeordnet, dessen Durchmesser allerdings größer ist als derjenige des Einspannabschnittes 6 oder des Einspannabschnittes 7. Dem zuvor beschriebenen Schlankheitsgrad bzw. dem Verhältnis von überkragender Länge zum Durchmesser wird hier der geringere, schwächere Durchmesser, nämlich der Durchmesser des Schneidenabschnittes 7 zugrunde gelegt, wobei obige Grenzen für das Verhältnis von überkragender Länge zum Durchmesser gelten.

Das gezeigte Bearbeitungswerkzeug weist analog zu den Ausführungsbeispielen nach den Fig. 1 bis 5 eine mittige Aufnahmebohrung 5 mit einer die Steifigkeit erhöhenden Füllung 4 auf. Für die Füllung 4 gelten die gleichen Maßgaben wie bei den Ausführungsbeispielen nach den Fig. 1 bis 5. In den übrigen Merkmalen und Bezugszeichen - sofern nicht ausdrücklich anders erwähnt - stimmt das Ausführungsbeispiel nach Fig. 6 mit denjenigen nach den Fig. 1 bis 5 überein. Im Übrigen stimmen diesbezüglich auch die Ausführungsbeispiele nach den Fig. 1 bis 5 untereinander überein.

Durch die erfindungsgemäße Ausgestaltung ist eine Erhöhung der Biegebruchfestigkeit des Schaftes 2 sowie eine Reduzierung des Auslenkweges unter Biegebelastung bei der Bearbeitung erzielt. Außerdem ist das Schwingungsverhalten positiv beeinflusst. Hieraus folgt, dass die erfindungsgemäß ausgeführten Bearbeitungswerkzeuge mit erhöhter Vorschubgeschwindigkeit bei erhöhter Biegebelastung betrieben werden können. Alternativ oder ergänzend dazu können größere Schlankheitsgrade, also Verhältnisse von überkragender Länge zum Bezugsdurchmesser realisiert werden, womit auch sehr schlanke Werkzeuge wie beispielsweise ein solches nach Fig. 6 mit erhöhter Wirtschaftlichkeit betrieben werden können.

## Patentansprüche

1. Bearbeitungswerkzeug für die zerspanende Bearbeitung von Werkstoffen, insbesondere für Holz oder holzartige Werkstoffe, Metalle, Kunststoffe und/oder Verbundwerkstoffe, vorgesehen zum drehenden Antrieb um eine Drehachse (1), wobei das Bearbeitungswerkzeug einen Schaft (2) aufweist,
**dadurch gekennzeichnet, dass** der Schaft (2) einen Grundkörper (3) mit einem mittigen Aufnahmeraum umfasst, wobei der Aufnahmeraum eine die Steifigkeit des Schaftes (2) erhöhende Füllung (4) enthält.

2. Bearbeitungswerkzeug nach Anspruch 1,
**dadurch gekennzeichnet, dass** der Aufnahmeraum als koaxial zur Drehachse (1) angeordnete Aufnahmebohrung (5) ausgeführt ist.

3. Bearbeitungswerkzeug nach Anspruch 1 oder 2,
**dadurch gekennzeichnet, dass** der Schaft (2) einen Einspannabschnitt (6) und einen Schneidenabschnitt (7) aufweist, und dass sich der Aufnahmeraum sowie seine Füllung (4) zumindest über den Grenzbereich von Einspannabschnitt (6) und Schneidenabschnitt (7) erstreckt.

4. Bearbeitungswerkzeug nach Anspruch 3,
**dadurch gekennzeichnet, dass** der Schaft (2) einen zwischen dem Einspannabschnitt (6) und dem Schneidenabschnitt (7) liegenden Zwischenabschnitt (8) aufweist, und dass die Füllung (4) zumindest über einen Teil des Einspannabschnittes (6), über den Zwischenabschnitt (8) sowie zumindest über einen Teil des Schneidenabschnittes (7) verläuft.

5. Bearbeitungswerkzeug nach einem der Ansprüche 1 bis 4,
**dadurch gekennzeichnet, dass** sich der Aufnahmeraum ausgehend von einem einspannseitigen Ende (9) des Schaftes (2) bis in den Schneidenabschnitt (7) hinein erstreckt.

6. Bearbeitungswerkzeug nach einem der Ansprüche 1 bis 5,
**dadurch gekennzeichnet, dass** das Verhältnis einer über den Einspannabschnitt (6) überkragenden Länge des Schaftes (2) zum Durchmesser des Schneidenabschnittes (7) oder des Zwischenabschnittes (8) ≥ 2,0 und insbesondere ≥ 2,5 ist.

7. Bearbeitungswerkzeug nach einem der Ansprüche 1 bis 6,
**dadurch gekennzeichnet, dass** die Füllung (4) als Stift (10) ausgeführt ist.

8. Bearbeitungswerkzeug nach Anspruch 7,
**dadurch gekennzeichnet, dass** der Stift (10) unter radialer Vorspannung in der Aufnahmebohrung (5) gehalten ist.

9. Bearbeitungswerkzeug nach Anspruch 7 oder 8,
**dadurch gekennzeichnet, dass** der Stift (10) einen größeren E-Modul aufweist als das Material des Grundkörpers (3) und insbesondere als Hartmetallstift ausgeführt ist.

10. Bearbeitungswerkzeug nach einem der Ansprüche 1 bis 6,
**dadurch gekennzeichnet, dass** die Füllung (4) durch eine gestaltlose Masse (11), insbesondere durch eine Flüssigkeit, ein Pulver und/oder ein Polymer gebildet ist, dass der Aufnahmeraum geschlossen ist, und dass die gestaltlose Masse (11) unter Innendruck im geschlossenen Aufnahmeraum gehalten ist.

11. Bearbeitungswerkzeug nach Anspruch 10,
**dadurch gekennzeichnet, dass** ein Verschlussstopfen (12) für den geschlossenen Aufnahmeraum vorgesehen ist, der mittels eines Gewindes (13) mit dem Grundkörper (3) verschraubt ist.

12. Bearbeitungswerkzeug nach einem der Ansprüche 1 bis 11,
**dadurch gekennzeichnet, dass** der Grundkörper (3) des Schaftes (2) aus Stahl oder Aluminium bzw. einer Aluminiumlegierung ist.
